Europäisches Patentamt

**European Patent Office**

**Office européen des brevets**

(19)

(11) Numéro de publication: **0 060 183**
**A1**

(12)

# DEMANDE DE BREVET EUROPEEN

(21) Numéro de dépôt: **82400347.9**

(22) Date de dépôt: **02.03.82**

(51) Int. Cl.³: **C 04 B 13/14**

(30) Priorité: **03.03.81 FR 8104241**

(43) Date de publication de la demande:
**15.09.82 Bulletin 82/37**

(84) Etats contractants désignés:
**DE GB IT SE**

(71) Demandeur: **SOCIETE ANONYME D'EXPLOSIFS ET DE PRODUITS CHIMIQUES**
**61, rue Galilée**
**F-75008 Paris(FR)**

(72) Inventeur: **Benichou, Alain Daniel**
**1, rue du Biez**
**F-21270 Pontailler sur Saône(FR)**

(72) Inventeur: **Paban, Rolland**
**Soissons sur Nacey**
**F-21270 Pontailler sur Saône(FR)**

(74) Mandataire: **Richebourg, Michel François**
**Cabinet Beau de Loménie 55, rue d'Amsterdam**
**F-75008 Paris(FR)**

(54) **Produit plâtre/résine/fibres de verre pour la protection par pulvérisation des galeries de mines, procédé de consolidation correspondant.**

(57) Composition sèche de plâtre/résine/fibres de verre pouvant être projetée avec de l'eau sur la paroi des galeries à l'aide d'une machine à projeter le béton par voie sèche, et ayant un durchissement très rapide.

EP 0 060 183 A1

Croydon Printing Company Ltd.

Produit plâtre/résine/fibres de verre pour la protection par pulvérisation des galeries de mines, procédé de consolidation correspondant.

La présente invention concerne le domaine de la protection ou consolidation superficielle des galeries de mines, ouvrages d'art, et analogues.

A l'heure actuelle, les problèmes de tenue de terrains, immédiatement après excavation ou à une phase ultérieure, sont en partie résolus par l'emploi du béton projeté en tant que moyen de soutènement associé ou non à un autre type de soutènement ou en tant que revêtement.

Dans certains cas, il peut être nécessaire de stabiliser les terrains dans l'heure qui suit les travaux de percement. Le béton projeté est alors d'une efficacité douteuse dans la mesure où ses qualités mécaniques, au bout d'une heure, ne sont pas très élevées.

On a déjà tenté d'utiliser la projection de résines sur les parois, et notamment de résines de Poly-uréthanne.

Ces types de résine présentent de nombreux inconvénients liés au risque d'incendie, aux vapeurs de solvants, etc., et pouvant nécessiter le port de masques respiratoires.

On a également proposé la projection de résines aminoplastes et d'eau, mais on a alors observé un très fort retrait et l'apparition de nombreuses fissures.

Il faut noter que les résines aminoplastes sont connues comme adhésifs, et également pour le comblement de fissures (ce qui n'est absolument pas comparable à l'obtention d'un revêtement uniforme).

La Demanderesse a enfin proposé, dans sa demande de brevet français n° 80/16532 déposée le 25 juillet 1980, des compositions associant le plâtre, une résine aminoplaste, et de l'eau, dans certaines conditions.

La présente invention représente un perfectionnement substantiel par rapport à ce dernier produit, au plan notamment du temps de prise et de la suppression des problèmes du vieillissement.

Le produit selon l'invention se présente sous la forme d'une poudre blanche contenant des fibres de verre. Elle est non toxique et ininflammable. Elle est prête à l'emploi et est conditionnée par exemple en sacs plastiques de 25 kg. Mélangée à l'eau, elle durcit très rapidement.

Sa mise en oeuvre nécessite l'emploi d'une machine à projeter le béton par voie sèche. Le produit est directement versé dans la trémie d'alimentation de la machine et est projeté sur la paroi à traiter. L'apport d'eau ne se fait qu'à l'extrémité de la lance.

Le temps de prise est de l'ordre de 3 minutes. Le durcissement progresse très rapidement dans la première heure puis croît régulièrement jusqu'à 28 jours.

Du fait de ses bonnes caractéristiques mécaniques, il n'est pas nécessaire d'appliquer le produit en couches épaisses.

La technique de projection présente les mêmes avantages que la technique de projection du béton par voie sèche :

- souplesse d'utilisation :

. la mise en oeuvre de petites quantités de produit est très rapide.

. les cadences de projection peuvent varier.

. le nettoyage du matériel est restreint.

- grande force de projection :

. le compactage du produit appliqué est très bon.

- transport du produit à sec.

- transport possible à longue distance.

De plus, le produit selon l'invention présente les avantages suivants :

. deux hommes suffisent alors que 7 à 8 hommes sont nécessaires pour la mise en oeuvre du béton projeté.

. suppression du poste préparation (plus de centrale à béton, etc.)

- pertes négligeables de 1 à 3 % contre 30 % en volume pour le béton projeté,

- poussière inférieure à celle que l'on peut observer lors d'une projection de béton,

- rendements très élevés :

. la granulométrie continue du produit favorise le rendement de projection,

. épaisseurs de couches nettement inférieures à celles du béton projeté.

- faible retrait du produit,

- stockage plus simple (mais à l'abri de l'humidité),

- caractéristiques mécaniques remarquables surtout au bout d'un quart d'heure.

Les quantités de produit sec à mettre en oeuvre par mètre carré et par centimère d'épaisseur sont d'environ 15 kg.

Les rendements obtenus avec une machine MEYCO / PICCOLA ont été de l'ordre de 60 m2/heure.

Le domaine d'application de cette nouvelle composition entre parfaitement dans celui du béton projeté :

- pour l'utilisation en tant que soutènement, une couche de produit de 1 cm d'épaisseur paraît être un minimum,

- pour l'utilisation en tant que revêtement, une couche de 0,5 cm d'épaisseur suffit.

On notera encore que le produit selon l'invention réalise une isolation thermique de l'ordre de $0,3 W/m^{\circ} K$ et phonique de la galerie, et un éclaircissement de ladite galerie.

D'autres caractéristiques et avantages de l'invention seront mieux compris à la lecture de la description qui va suivre et en se référant au dessin annexé sur lequel :

- la figure 1 représente un graphique de test de prise VICAT, sur le produit de l'invention, en fonction de la température de l'eau ;

   (1) début de prise | (a) temps de début et de fin de prise (min.)
   (2) fin de prise | (b) température de l'eau, °C
   Partie mobile 300 g
   Contrainte de compression: 32 bars
   Poudre 75 % eau 25 %
   (NF P 15 431)

- la figure 2 représente un graphique de test de prise VICAT, en fonction du pourcentage d'eau dans le mélange de composition pulvérulente selon l'invention + eau.

   (1) début de prise | (a) temps de début et de fin de prise (min.)
   (2) fin de prise | (b) pourcentage d'eau dans le mélange
   Partie mobile 300 g
   Contrainte de compression : 32 bars Température de l'eau : 9° C (NF P 15 431)

Ces courbes permettront à l'homme de métier de déterminer facilement certains paramètres de mise en oeuvre en fonction de l'utilisation envisagée.

Le produit selon l'invention consiste donc en une poudre dont les composants essentiels, qui agissent en combinaison, sont les suivants :

- plâtre (semi-hydrate de sulfate de calcium)...

    50 à 60 parties en poids, environ ;

- résine mélamine-formol ou urée-formol atomisée :

    5 à 10 parties en poids, environ.

Le produit projeté comprend naturellement un troisième composant essentiel, l'eau.

Les propriétés du produit sont améliorées par l'adjonction des produits suivants :

- chlorure d'ammonium  environ 0,5 à 0,6 partie en poids
- sulfate de potassium environ 0,5 à 0,6 partie en poids
- charges minérales inertes ou

    liants hydrauliques  environ 40 à 20 parties en poids
- fibres de verre coupées environ 2 à 6 parties en poids.

Ces divers composants et leur fonction sont explicités dans ce qui suit :

1) Le semi-hydrate est un plâtre de forme "$\alpha$", naturel (autoclave) ou synthétique. (Dérivé du phosphogypse). La teneur en carbonate de calcium doit être inférieure à 2 % sinon une réaction se produit avec le catalyseur acide de la résine urée-formol c'est-à-dire un moussage du produit sans polycondensation de la résine.

Exemples de plâtres utilisables : "HERCULITE n° 2" (commercialisé par la Société BRITISH GYPSUM), "LUDUR" (commercialisé par la Société GIULINI).

On pourra aussi utiliser les phosphoplâtres parfaitement cristallisés sous forme de prismes (forme $\alpha$).

La forme $\beta$ obtenue par un procédé de cuisson par voie sèche ne convient pas.

2) Le chlorure d'ammonium est un catalyseur acide pour la polycondensation de la résine.

3) Le sulfate de potassium est un accélérateur de prise pour le plâtre.

4) La résine urée-formol atomisée est de même nature que celle utilisée dans la demande de brevet précitée :
Exemple : RESURPA RP 306 (commercialisé par la Société CECA).

5) Charges minérales inertes ; par exemple du sable de quartz dont la granulométrie sera préférentiellement inférieure à 1 mm afin d'éviter une séparation rapide des particules au cours du phénomène de projection.
Exemple : Sable "NE 34" (commercialisé par la Société SIFRACO) dont la dimension des grains s'étage de 75 à 425 microns.

Liant hydraulique; il sera intéressant de remplacer en partie ou en totalité le sable par de l'anhydrite naturel ou synthétique qui conférera des propriétés mécaniques et d'hydrofugation intéressantes au produit projeté.

On pourra aussi utiliser des cendres volantes.

Des additifs d'hydrofugation tels que des stéarates de calcium ou des mélanges de stéarates (exemple : "HYDROFUGE NBL" de BARLOCHER) pourront être utilisés.

Avec les produits silicones, il se produit une interaction avec le chlorure d'ammonium, celle-ci s'accompagnant d'un dégagement d'ammoniac.

Des additifs antistatiques tels que le graphite ou la magnétite peuvent être éventuellement inclus dans la poudre, l'inconvénient principal résidant dans la formation de poussières au cours de la projection.

6) Le choix de la fibre de verre coupée est important qualitativement et dimensionnellement.

- il vaut mieux une fibre de verre liée que non liée, cette dernière étant défibrée au cours de la fabrication de la poudre.

- du point de vue longueur de fibre de verre celle-ci doit être comprise entre 4,5 et 13 mm ; préférentiellement 6 mm.

La poudre selon l'invention, prête à l'emploi, présente une granulométrie inférieure à 0,475 mm, de telle manière qu'il ne se produise pas de ségrégation des particules ni au cours de la projection, ni sur le trajet de la trémie au poste de projection, parfois éloigné de plusieurs centaines de mètres. La densité du produit mis en place est de 1,70 à 1,80 environ. /⁻A cet égard, le choix de la proportion d'eau est ainsi mis à la portée de l'homme du métier, au besoin à l'aide de quelques essais simples connus.⁻7

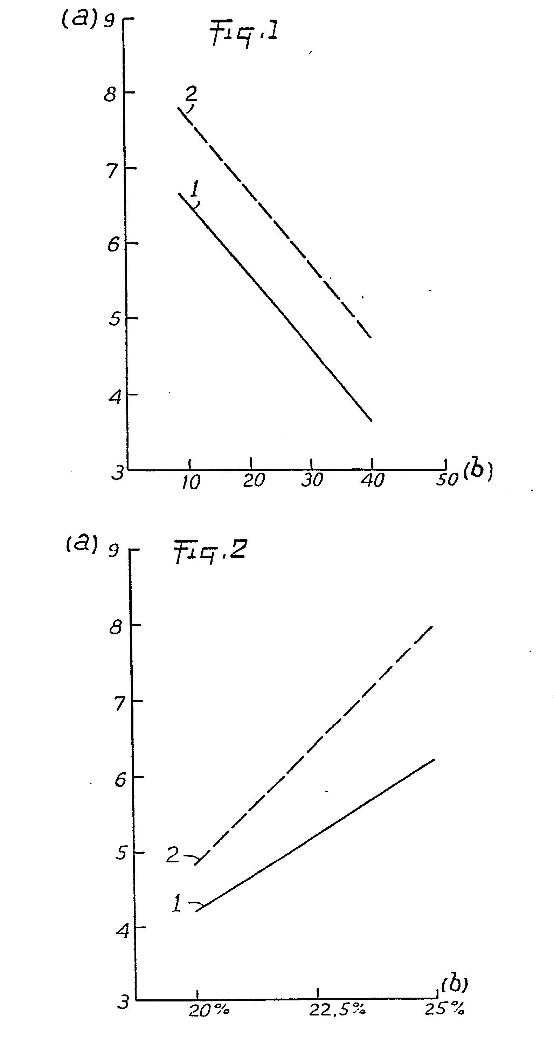

La proportion poudre/eau sera en pratique d'environ 75/25 à 85/15, de préférence de 80/20, en poids- (cf. figure 2).

Les exemples suivants illustrent l'invention sans toutefois en limiter la portée.

EXEMPLE 1 : Revêtement provisoire de galerie :

- Composition pulvérulente :

| | |
|---|---|
| Plâtre "HERCULITE n° 2" | 54,4 parties en poids |
| $NH_4 Cl$ | 0,5 partie en poids |
| $K_2 SO_4$ | 0,5 partie en poids |
| résine urée formol "RESURPA RP 306" | 5 parties en poids |
| charge minérale (sable de quartz) | 36 parties en poids |
| fibres de verre (roving) | 3,6 parties en poids |

- Machine de projection : du type MEYCO ou PICCOLA (lance simple de projection , avec ou sans prémouillage).

- Mode opératoire :

. verser le produit prêt à l'emploi dans la trémie d'alimentation,

. régler les débits d'air et d'eau à la lance afin d'obtenir un mouillage correct du produit (25 % d'eau environ),

. projeter sur la paroi à traiter, celle-ci pouvant être préalablement nettoyée à l'eau pour améliorer l'accrochage du produit,

. tenir la lance perpendiculaire à la paroi à une distance de 1 m à 1,5 m.

. faire bien attention, en fin de projection, à ne pas laisser l'eau pénétrer dans le tuyau d'amenée du produit entre la machine et la lance. Bien respecter, dans l'ordre, les instructions de mise en route et d'arrêt de la machine.

- Rendement :

     60 m2/h pour une couche d'épaisseur 1 cm
(le rendement dépend de la machine utilisée).

- Résultats :

     . absence de rebonds et de retombées,

     . pertes négligeables (1 à 3 %),

     . main d'oeuvre réduite à 2 hommes,

     . quantité de produit sec/m2/cm d'épaisseur :
      15 kg.

- Temps de début de prise : 4 min. à 35° C.


EXEMPLE 2 :

     On a repris l'exemple 1 en remplaçant 20 parties
en poids de sable par de l'anhydrite.

     On a obtenu sensiblement les mêmes résultats
que dans l'exemple 1.


EXEMPLE 3 :


     On a utilisé la composition de l'exemple 1
pour la consolidation de terrains immédiatement après
excavation (tunnel) et pour l'isolation de terrains en
vue d'éviter leur oxydation.

     Les objectifs ont été atteints avec de très
bons résultats qualitatifs.


EXEMPLE 4 :

     Des essais complémentaires ont été effectués
en faisant varier la nature des fibres de verre.

Les résultats sont rassemblés dans les Tableaux I et II annexés.

"Produit a" : produit de l'exemple 1 avec fibres de verre liées de 6 mm.

"Produit b" : produit de l'exemple 1 avec fibres de verre liées de 13 mm.

EXEMPLE 5 :

On a effectué, sur la composition de l'exemple 1, des essais de perméabilité, d'arrachement et de retrait-gonflement, ainsi que la détermination du module statique d'élasticité.

- Perméabilité :

On a effectué les essais à 13 et 15° C sous une hygrométrie de 40 et 65 % d'humidité relative.

Le mode opératoire est celui de la Norme NF P 31 304 (août 1973) faisant référence à la perméabilité des tuiles de terre cuite.

On mesure la perméabilité sous une hauteur d'eau de 10 cm.

On utilise des épouvettes carrées de 15 cm de côté découpées dans la croûte.

On conserve les éprouvettes durant 28 jours à 20° C et sous 100 % d'humidité relative.

La seule différence avec le mode opératoire de la norme précitée est que l'on effectue un séchage préalable à l'étuve de 105 ° C.

La perméabilité moyenne sur trois essais est de 0,53 cm3/cm2.24 h.

Les résultats de ces essais montrent que le revêtement entre dans la classe de la "qualité imperméable".

- Arrachement :

Cet essai a pour but de mesurer les caractéristiques d'adhérence d'un enduit sur un support. On effectue la projection de la composition selon l'invention sur différents supports, comme indiqué dans l'Exemple 1.

Le revêtement est abandonné durant 28 jours, à l'air ambiant du laboratoire, à 20° C.

On effectue ensuite un carottage de Ø 4,1 cm, déterminant une surface d'arrachement de 13 cm2.

On effectue ensuite un effort perpendiculaire d'arrachement.

Les résultats sont les suivants :

|  | valeur moyenne MPa |  |
| --- | --- | --- |
| sur calcaire Comblanchien | 0,49 | sur 10 essais |
| sur béton sale | 0,10 | sur 8 essais |
| sur béton propre | 1,13 | sur 6 essais |
| sur charbon | 0,06 | sur 4 essais |
| sur granit | 0,39 | sur 7 essais |

- <u>Retrait/gonflement</u> :

Les éprouvettes sont conservées à l'air ambiant et à 20° C pour l'essai de retrait et sous 100 % d'humidité relative et à 20° C pour l'essai de gonflement (24 h après le démoulage). Ces essais correspondent à la Norme P 15 433 (juillet 1963).

Les résultats sont les suivants :

| 3 jours | 7 jours | 28 jours | temps |
|---------|---------|----------|-------|
| 80 $\mu$/m | 125 | 135 | retrait |
| 500 $\mu$/m | 610 | 1070 | gonflement |

Ainsi le retrait est plus faible que celui du béton tandis que le gonflement est plus important que celui du béton.

En ce qui concerne le gonflement, on doit noter qu'il se produit un phénomène de "coque".

- <u>Module</u> :

Les éprouvettes sont conservées à l'air ambiant et à 20° C.

Le module statique d'élasticité est de 14441 MPa.

Ce module représente environ la moitié de celui du béton, le revêtement selon l'invention étant donc sensiblement deux fois plus élastique que le béton.

On notera que les caractéristiques spéciales d'imperméabilité du revêtement obtenu selon l'invention permettent d'envisager son utilisation dans des secteurs particuliers comme les Travaux Publics, l'étanchéification de conduits d'effluents, et même de marais, etc.

## T A B L E A U  I

### "Produit a"  (chargé en 6 mm)

COMPRESSION SIMPLE   (résultats en bars)

|  | 1/4 h | 1 h | 6 h | 24 h | 7 jours | 28 jours |
|---|---|---|---|---|---|---|
| conservé dans l'air | 432 | 723 | 700 | 880 | 1 114 | 1 870 |
| conservé dans l'eau |  |  |  | 354 | 510 | 545 |

TRACTION SIMPLE

|  | 1/4 h | 1 h | 6 h | 24 h | 7 jours | 28 jours |
|---|---|---|---|---|---|---|
| conservé dans l'air | 19,6 | 23,3 | 19,5 | 13,4 | 52 | 55,4 |
| conservé dans l'eau |  |  |  |  |  | 17 |

CISAILLEMENT SUR 2 PLANS

|  | 1/4 h | 1 h | 6 h | 24 h | 7 jours | 28 jours |
|---|---|---|---|---|---|---|
| conservé dans l'air | 171 | 210 | 266 | - | 343 | 500 |

TRACTION PAR FLEXION

|  | 1/4 h | 1 h | 6 h | 24 h | 7 jours | 28 jours |
|---|---|---|---|---|---|---|
| conservé dans l'air | 33,2 | 53,5 | 46,8 | 45,6 | 66 | 97,8 |
| conservé dans l'eau |  |  |  | 28 | 39 | 31 |

T A B L E A U   II

"Produit b"          (chargé en 13 mm)

COMPRESSION SIMPLE          (résultats en bars)

|                      | 1/4 h | 1 h | 6 h | 24 h | 7 jours | 28 jours |
|----------------------|-------|-----|-----|------|---------|----------|
| conservé dans l'air  | 377   | 460 | 424 | 460  | 713     | 1 689    |
| conservé dans l'eau  |       |     |     | 367  | 424     | 490      |

TRACTION SIMPLE

|                      | 1/4 h | 1 h | 6 h  | 24 h | 7 jours | 28 jours |
|----------------------|-------|-----|------|------|---------|----------|
| conservé dans l'air  | 11,7  | 14  | 11,9 | 18,4 | 28,4    | 42       |

CISAILLEMENT SUR 2 PLANS

|                      | 1/4 h | 1 h | 6 h | 24 h | 7 jours | 28 jours |
|----------------------|-------|-----|-----|------|---------|----------|
| conservé dans l'air  | 118   | 140 | 140 | 218  | 302     | 562      |

TRACTION PAR FLEXION

|                      | 1/4 h | 1 h | 6 h  | 24 h | 7 jours | 28 jours |
|----------------------|-------|-----|------|------|---------|----------|
| conservé dans l'air  | 26,2  | 40  | 49,2 | 39,4 | 50      | 32       |
| conservé dans l'eau  |       |     |      | 33,5 | 39,3    | 34       |

# R E V E N D I C A T I O N S

1. Composition à base de plâtre et de résine, destinée à être projetée avec de l'eau pour former un revêtement uniforme protecteur sur les parois de galeries de mines, tunnels et analogues, caractérisée en ce qu'elle consiste essentiellement en un mélange pulvérulent de :
- plâtre : environ 50 à 60 parties en poids,
- résine : mélamine-formol ou urée formol environ 5 à 10 parties en poids.

2. Composition selon la revendication 1, caractérisée en ce que la résine est atomisée.

3. Composition selon la revendication 1 ou 2, caractérisée en ce qu'elle comporte de plus de 2 à 6 parties en poids de fibres de verre coupées.

4. Composition selon la revendication 3, caractérisée en ce que les fibres de verre sont de préférence liées et ont une longueur de 4,5 à 13 mm, de préférence 6 mm.

5. Composition selon l'une quelconque des revendications 1 à 4 caractérisée en ce qu'elle contient de plus :

$NH_4 Cl$ environ 0,5 à 0,6 partie en poids

$K_2 SO_4$ environ 0,5 à 0,6 partie en poids Charges minérales inertes et/ou liants hydrauliques 40 à 20 parties en poids.

6. Composition selon la revendication 5 caractérisée en ce que les charges inertes consistent en sable de 75 à 425 $\mu$ et les liants hydrauliques en anhydrite naturel ou synthétique.

7.    Composition selon l'une quelconque des revendications 1 à 6 caractérisée en ce qu'elle contient de plus des additifs d'hydrofugation tels que des stéarates et/ou des additifs antistatiques tels que graphite ou magnétite.

8.    Composition selon l'une quelconque des revendications 1 à 6, caractérisée en ce qu'elle consiste en :

| | |
|---|---|
| plâtre "HERCULITE n° 2" | 54,4 parties en poids |
| $NH_4$ Cl | 0,5  partie en poids |
| $K_2$ $SO_4$ | 0,5  partie en poids |
| résine urée-formol "RESURPA RP 306" | 5  parties en poids |
| charge minérale  (sable de quartz) | 36  parties en poids |
| fibres de verre (roving) | 3,6  parties en poids |

9.    Procédé de protection ou de consolidation de parois de galeries de mines, tunnels et analogues par formation d'un revêtement uniforme, caractérisé en ce que le revêtement est obtenu par projection en proportions appropriées d'une composition sèche pulvérulente selon l'une quelconque des revendications 1 à 8 et d'eau, le mélange se faisant à l'extrémité de la lance de projection.

10.    Procédé selon la revendication 9, caractérisé en ce que la proportion composition pulvérulente/eau est choisie entre 75/25  et 85/15 environ, de préférence 80/2Q en poids.

11.    Procédé selon la revendication 9 ou 10, caractérisé en ce qu'il est mis en oeuvre à l'aide d'une machine à projeter le béton.

Fig.1

Fig.2

0060183

1/1

# 0060183

**Office européen des brevets**

## RAPPORT DE RECHERCHE EUROPEENNE

Numéro de la demande

EP 82 40 0347

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | DE-A-2 359 290 (SUDDEUTSCHE KALKSTICKSTOFFWERKE A.G.) <br> * revendications 1,2 * <br><br> --- | 1,11 | C 04 B 13/14 |
| A | US-A-2 842 121 (JOHNSON & JOHNSON) <br> * exemple 1; revendication 1 * <br><br> --- | 1 | |
| A | DD-A- 73 730 (GROHMANN, FISCHER) <br> * revendication unique * <br><br> --- | 1 | |
| A | US-A-2 842 120 (JOHNSON & JOHNSON) <br> * revendication 1; tableau 1 * <br><br> --- | 1,5 | |
| A | DE-A-2 650 265 (Z.L. SOPHIA) <br><br> --- | 1 | **DOMAINES TECHNIQUES RECHERCHES (Int. Cl. ³)** |
| A | CHEMICAL ABSTRACTS, vol.84, 1976, page 341, résumé no. 64543w, Columbus, Ohio (US), & Chem. Kunstst.-Aktuell 1975, 29(2), 71-4, P. DIERKES et al.:"Effect of synthetic macromolecular additives on the formation of the hydration products of portland cement and gypsum" <br><br> ----- | 1 | C 04 B |

Le present rapport de recherche a été établi pour toutes les revendications

| Lieu de la recherche | Date d'achèvement de la recherche | Examinateur |
|---|---|---|
| LA HAYE | 24-05-1982 | STANGE R.L.H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82